# EUROPÄISCHE PATENTSCHRIFT

(11) **EP 2 282 975 B1**
(45) Veröffentlichungstag und Bekanntmachung des Hinweises auf die Patenterteilung: **09.05.2012**
(21) Anmeldenummer: 09761422.6
(22) Anmeldetag: 04.06.2009
(51) Int. Cl.: C03B 9/453

(54) **VORRICHTUNG ZUM SCHIEBEN VON GLASGEGENSTÄNDEN AUF EIN TRANSPORTBAND**
APPARATUS FOR PUSHING GLASS ARTICLES ONTO A BELT CONVEYOR
DISPOSITIF POUR FAIRE GLISSER DES OBJETS EN VERRE SUR UNE BANDE TRANSPORTEUSE

(30) Priorität: 12.06.2008 DE 102008027911
(43) Veröffentlichungstag der Anmeldung: 16.02.2011
(73) Patentinhaber: Heye International GmbH, 31683 Obernkirchen (DE)
(72) Erfinder: WINKELHAKE, Dirk, 31688 Nienstädt (DE); HÜBNER, Matthias, 31655 Stadthagen (DE); FELGENHAUER, Benedikt Dr., 32049 Herford (DE)
(74) Vertreter: Sobisch, Peter
(86) Internationale Anmeldenummer: PCT/EP2009/003985
(87) Internationale Veröffentlichungsnummer: WO 2009/149859

(56) Entgegenhaltungen:
- DE-A1-102004 007 507
- GB-A- 2 435 025

## Beschreibung

Die Erfindung bezieht sich auf eine Vorrichtung entsprechend dem Oberbegriff des Anspruchs 1.

Der Herstellungsprozess von Hohlglasartikeln ausgehend von der Formgebung eines Glaspostens in einer Vorform über die Fertigform bis hin zu der Behandlung in einem Kühlofen ist durch zahlreiche Transport- und Manipulationsvorgänge gekennzeichnet, von deren Geschwindigkeit und Zuverlässigkeit der darstellbare Produktionsausstoß abhängt. Dies gilt unter anderem für den Vorgang des Überschiebens von einer Fertigform entnommenen und auf einer ruhenden Absetzpatte abgestellten Artikeln auf ein bewegtes Transportband, auf welchem die Artikel in einer Reihenanordnung hintereinander zu positionieren sind. Da bei IS-Maschinen (individual section) ein solches Transportband regelmäßig mit einer Vielzahl von Fertigungsstationen zusammenwirkt, deren jede mit einer Absetzplatte versehen ist, auf der taktweise wenigstens zwei fertig geformte Artikel abgestellt werden, muss der Vorgang des Überschiebens auf das Transportband in Abstimmung mit dessen Geschwindigkeit sowie dem Arbeitstakt der Fertigungsstationen erfolgen, um auf dem Band eine definierte Reihe zu bilden.

Als unmittelbar mit den Hohlglasartikeln zusammenwirkende Manipulationsorgane sind diverse Formen von Überschiebern bekannt, an deren, dem Artikel zugekehrten Ende sich Schubfinger befinden, die während des Überschiebevorgangs an den Artikeln anliegen. Der Überschiebevorgang ist so einzurichten, dass er schnell innerhalb eines vorgebbaren Zeitintervalles bewirkt werden kann. Ein infolge des Überschiebens Umfallen des auf der Absetzplatte aufstehenden Artikels und ein Beschädigen müssen gleichermaßen vermieden werden, so dass der Artikel am Ende der Überführungskurve auf dem Transportband in einer definierten Position, einem Übergabepunkt aufsteht und sich geschwindigkeitsgleich mit dem Band bewegt. Nach Maßgabe der konkreten Gestaltung einer Überführungskurve zwischen einem Aufnahmepunkt auf der Absetzplatte und dem Übergabepunkt auf dem Transportband unterliegt der Artikel jedoch Beschleunigungen in radialer und tangentialer Richtung, deren Beherrschung unter dem Gesichtspunkt einer positionsgenauen und beschädigungsfreien Übergabe auf das Transportband erforderlich ist, mit zunehmender Geschwindigkeit jedoch problematisch wird und besondere Sicherungsmaßnahmen erforderlich macht.

Aus der EP 1 627 858 A1 ist eine Überschiebevorrichtung bekannt, bei der ein an seinem einen Ende um eine vertikale ortsfest angeordnete Achse schwenkbarer Hebel an seinem anderen Ende ebenfalls um eine vertikale Achse schwenkbar das eine Ende eines zweiten Hebels trägt, an dessen anderem Ende wiederum um eine senkrechte Achse schwenkbar ein mit drei Schubfingern ausgerüsteter Überschieber gelagert ist. Den Rotationen des ersten Hebels um die ortsfeste Achse, derjenigen des zweiten Hebels gegenüber dem ersten Hebel sowie derjenigen des Überschiebers gegenüber dem zweiten Hebel sind voneinander unabhängig steuerbare Antriebe zugeordnet, so dass eine Überführungskurve ausgehend von einem Aufnahmepunkt auf einer Absetzplatte bis zu einem Übergabepunkt aus der Überlagerung von drei Teilbewegungen darstellbar ist. Von den zur Darstellung dieser drei Teilbewegungen benötigten Drehantrieben sind wenigstens zwei ortsfest angeordnet.

Aus der DE 10 2004 010 238 B3 ist eine weitere Überschiebevorrichtung bekannt, bei der die Überführungsbewegung eines Schubfinger tragenden Überschiebers zwischen einer Absetzplatte und einem sich bewegenden Transportband durch drei unabhängig voneinander steuerbare Rotationsbewegungen bewirkt wird, durch deren Überlagerung eine solche Überführungskurve dargestellt ist, die ausgehend von einem Aufnahmepunkt auf der Absetzplatte in einem Berührungspunkt tangential an die Bewegungsrichtung des Transportbandes herangeführt ist und im Anschluß an diesen Berührungspunkt noch um ein definiertes lineares Wegelement bis zum Erreichen eines Lösepunktes, an dem der Eingriff der Schubfinger gelöst wird, geschwindigkeits- und richtungsgleich mit der Bewegung des Transportbandes fortgeführt ist. Diese Maßnahme dient zur weiteren Positionssicherung der Hohlglasartikel während des Überführens. Diese durch drei zu steuernde Achsen gekennzeichneten Überschiebevorrichtungen gestalten sich jedoch steuerungstechnisch und erst recht von ihrem konstruktiven Aufbau her vergleichsweise aufwändig, nachdem drei ortsfest angeordnete Drehantriebe benötigt werden.

Aus der GB 2 435 025 A ist eine vergleichbare Vorrichtung bekannt, bei welcher die Überführungskurve eines Überschiebers zwischen einer Absetzplatte und einem sich bewegenden Transportband durch Überlagerung der durch zwei ortsfest nebeneinander angeordnete Drehantriebe erzeugten Rotationsbewegungen dargestellt ist. Hierbei werden zwei Getriebe benötigt, nämlich für die Drehung um eine gemeinsame Hauptachse und zur Weiterleitung einer Drehbewegung von der Hauptachse zu der Drehachse des Überschiebers. Bei einer Drehung des Überschiebers rotieren somit stets beide Getriebe.

Aus der CH 698 252 B1 ist eine andere Vorrichtung bekannt, bei welcher die Überführungskurve eines Überschiebers zwischen einer Absetzplatte und einem sich bewegenden Transportband durch Überlagerung der durch zwei ortsfest hintereinander angeordnete Drehantriebe erzeugten Rotationsbewegungen dargestellt ist. Hierbei wird ein Getriebe benötigt, wobei der eine der beiden Drehantriebe ein Hohlwellenmotor ist, wobei auch in diesem Fall eine Drehbewegung auf die Drehachse des Überschiebers zu übertragen ist. Schwierig in diesem Fall dürfte die Auffindung eines geeigneten Hohlwellenmotors sein.

Die aus den Dokumenten GB 2 435 025 A und CH 698 252 B1 bekannt gewordenen Vorrichtungen bringen zwar infolge der Verminderung der Anzahl der einzusetzenden und zu steuernden Drehantriebe Vorteile gegenüber dem eingangs dargelegten, durch drei Drehantriebe gekennzeichneten Stand der Technik. Auch diese Lösungen sind jedoch mit dem Nachteil behaftet, dass infolge der ortsfest angeordneten beiden Drehantriebe vergleichbar komplizierte Getriebe benutzt werden müssen, um auf dieser Grundlage die Überlagerung von zwei Drehbewegungen konstruktiv darzustellen. Diese zwangsweise bei jeder Betätigung des Überschiebers mitbewegten Getriebeteile erhöhen die Trägheit des Gesamtsystems. Hinzu tritt jedoch der Umstand, dass Elemente in der Umgebung einer Glasformmaschine zum Einsatz kommen, somit in einer, durch Hitze, Öl, Staub und Glasreste gekennzeichneten, die Lebensdauer der Getriebeteile mindernden Atmosphäre. Dies bringt einen hohen Wartungsaufwand mit sich.

Aus dem Dokument DE 10 2004 007 507 A1 ist eine Vorrichtung zum Verschieben von Glaswaren bekannt, die dazu bestimmt ist, diese Glaswaren von einem ersten Band, auf dem sie einer Reihe hintereinander angeordnet sind, nämlich einem sich relativ schnell bewegenden Querband auf ein zweites, sich senkrecht zu dem ersten relativ langsam bewegendes Band, ein Längsband zu überführen, auf dem sie in Gruppen quer zur Förderrichtung nebeneinander angeordnet sind. Durch das Längsband werden die Glaswaren beispielsweise in einen Kühlofen überführt, wobei die Breite des Längsbandes u. a. von der Breite des Kühlofens abhängt. Es handelt sich somit in Abweichung von dem eingangs vorgestellten Stand der Technik nicht um eine Bewegung von einer Absetzplatte, somit einem ruhenden Ausgangspunkt auf ein sich bewegendes Band, so dass insoweit andere kinematische Ausgangsbedingungen herrschen. Diese Vorrichtung ist durch eine Überschieberleiste gekennzeichnet, die ausgehend von dem ersten Band entsprechend ihrer Länge eine bestimmte Anzahl von Glaswaren gleichzeitig erfasst und unter Anpassung an die unterschiedlichen Geschwindigkeiten der Bänder auf das zweite Band überschiebt, wobei diese Überschiebebewegung durch eine Überlagerung von eine drei Rotationsbewegungen und somit drei Drehantrieben dargestellt ist, von denen einer ortsfest angeordnet ist.

Es ist die Aufgabe der Erfindung, eine Vorrichtung der eingangs bezeichneten Art zu entwerfen, welche die Darstellung einer sicheren Positionierung der Hohlglasartikel auf dem Transportband bei gleichzeitiger Minderung eines konstruktiven Aufwands sowie eines notwendigen Wartungsaufwands ermöglicht. Gelöst ist diese Aufgabe bei einer solchen Vorrichtung durch die Merkmale des Kennzeichnungsteils des Anspruchs 1.

Das erfindungsgemäße Antriebssystem umfasst nur zwei zu steuernde Achsen und es sind dementsprechend nur zwei zur Generierung von Rotationsbewegungen bestimmte Drehantriebe vorgesehen, so dass eine Überführungskurve durch Überlagerung dieser beiden Rotationsbewegungen dargestellt ist. Die Überführungskurve ist in jedem Fall mit dem Ziel angelegt, ein beschädigungsfreies Schieben der Artikel auf das Transportband zu ermöglichen, und zwar innerhalb eines definierten Zeitintervalles, so dass auf dem Transportband eine Reihe bestehend aus diesen Artikeln gebildet wird. Es hat sich herausgestellt, dass mit einem solchen Antriebssystem sowohl eine Überführungskurve als auch eine Überführungsbewegung darstellbar ist, die bei hohen Geschwindigkeiten nach Maßgabe reproduzierbarer Übergabepunkte auf dem Transportband ein sicheres Überschieben der Artikel ermöglicht, somit unter Einsparung einer zu steuernden Achse.

Es ist ein Drehteller vorgesehen, der mit dem zweiten, zur Darstellung einer zweiten Rotationsbewegung bestimmten Drehantrieb in Antriebsverbindung steht. Wesentlich ist, dass der erste, zur Erzeugung der ersten Rotationsbewegung bestimmte Drehantrieb mit dem Drehteller in Verbindung steht. Im Ergebnis wird somit der durch die Drehung des Drehtellers gegebenen zweiten Rotationsbewegung, welche sich als Bewegung der den Überschieber tragenden Welle um die Achse des Drehtellers darstellt, die Rotationsbewegung um die Achse dieser Welle überlagert.

Gemäß den Merkmalen des Anspruchs 2 befindet sich der, die erste Rotationsbewegung erzeugende Drehantrieb unterhalb des Drehtellers, so dass eine raumsparende Bauweise ermöglicht wird.

Die Vorrichtung ist entsprechend den Merkmalen des Anspruchs 3 durch eine Konsole gekennzeichnet, die der Befestigung an dem Maschinenrahmen einer IS-Glasformmaschine dient.

Die Merkmale der Ansprüche 4 und 5 sind auf eine erste Variante der Erfindung gerichtet, bei welcher der Drehteller auf einer mit diesem in Verbindung stehenden vertikalen Hohlwelle abgestützt ist, die ihrerseits über eine feststehende vertikale Achse gelagert ist. Über diese Achse werden Tragkräfte auf die Konsole übertragen, auf der faktisch die gesamte Vorrichtung abgestützt ist.

Die Merkmale der Ansprüche 6 bis 9 sind auf eine zweite Variante der Erfindung gerichtet, bei der der Drehteller unterseitig über eine mit diesem in Verbindung stehende Hohlwelle abgestützt ist, die ihrerseits auf einer feststehenden Lagerglocke gelagert ist. Über die Lagerglocke werden Tragkräfte auf die Konsole übertragen, auf der auch in diesem Fall faktisch die gesamte Vorrichtung abgestützt ist.

Der zweite Drehantrieb kann entsprechend den Merkmalen der Ansprüche 10 und 11 bei der genannten ersten Variante an der Hohlwelle befestigt sein und mit der feststehenden Achse in Antriebsverbindung stehen. Er befindet sich in jedem Fall unterhalb des Drehtellers, so dass insgesamt eine besonders raumsparende Bauweise ermöglicht wird.

Entsprechend den Merkmalen des Anspruchs 12 ist ein Gehäuse vorgesehen, innerhalb welchem nahezu alle Komponenten des Antriebssystems untergebracht sind. Das Gehäuse bringt einen mechanischen und thermischen Schutz für die genannten Komponenten mit sich und verdeutlicht die raumsparende Weise der Vorrichtung insbesondere dann, wenn beide Drehantriebe innerhalb dieses Gehäuses angeordnet sind. Beide Drehantriebe sind unterhalb des Drehtellers angeordnet.

Von besonderem Vorteil für eine geringstmögliche mechanische Beanspruchung der Artikel während der Schiebebewegung ist es, wenn entsprechend den Merkmalen des Anspruchs 13 die Überführungskurve sowie die Überführungsbewegung mit der Maßgabe eingerichtet sind, dass sich entlang der Kurve eine sich ändernde Krümmung, beispielsweise eine exponentiale Kurve oder eine dieser angenäherte Kurve ergibt, wobei im Übergabepunkt, an dem sich der Eingriff der Schubfinger mit den Artikeln löst, diese sich zumindest angenähert tangential zu der Förderrichtung des Transportbandes und geschwindigkeitsgleich mit diesem bewegen. Diese Ziele sind durch eine dementsprechende Anpassung der durch die beiden Drehantriebe generierten Drehbewegungen erreichbar.

Die Erfindung wird im Folgenden unter Bezugnahme auf die in den Zeichnungen schematisch wiedergegebenen Ausführungsbeispiele näher erläutert werden. Es zeigen:
- Fig. 1: eine Darstellung eines ersten Ausführungsbeispiels einer erfindungsgemäßen Vorrichtung in einem Axialschnitt;
- Fig. 2: eine Darstellung eines zweiten Ausführungsbeispiels einer erfindungsgemä- ßen Vorrichtung in einem Axialschnitt;
Fig. 3 eine Draufsicht auf die Vorrichtung in einer Blickrichtung III der Fig. 2.

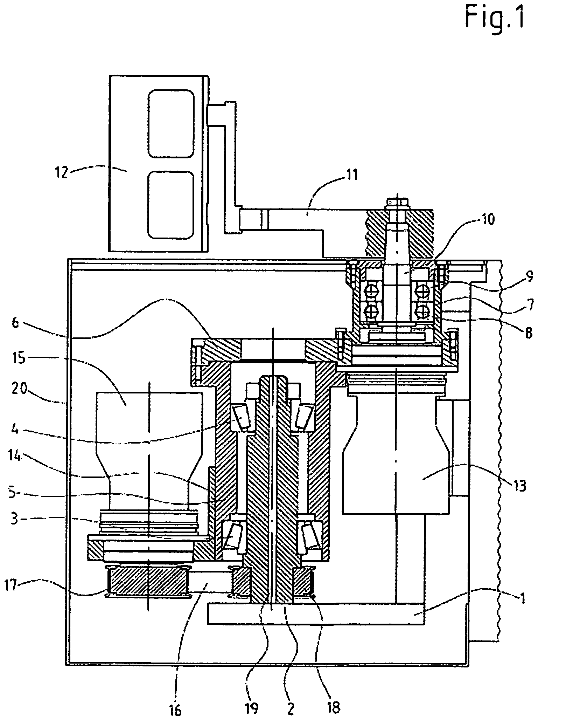

Mit 1 ist in Fig. 1 eine, an einem nicht dargestelltes Maschinenrahmen einer IS-Maschine befestigte, horizontale Konsole bezeichnet, auf der um eine fest angeordnete, sich vertikal erstreckende, hohl ausgebildete Achse 2 mittels Wälzlagern 3, 4 eine Hohlwelle 5 gelagert ist, die an ihrem oberen Ende mit einem Drehteller 6 in fester Verbindung steht.

Mit dem Drehteller 6 in fester Verbindung steht ein Lagerflansch 7, innerhalb welchem mittels Wälzlagern 8, 9 eine Welle 10 gelagert ist, deren oberes Ende in fester Verbindung mit dem einen Ende eines sich horizontal erstreckenden Überschiebers 11 steht, dessen anderes Ende in an sich bekannter Weise mit einer Anordnung von Schubfingern 12 ausgerüstet ist. Die Schubfinger 12 dieser Anordnung sind zur unmittelbaren Anlage an den ausgehend von einer Absetzplatte auf ein Transportband zu bewegenden Hohlglasartikeln bestimmt.

Mit 13 ist ein erster elektrischer Drehantrieb bezeichnet, z. B. ein Servomotor, der unterhalb des Drehtellers 6 gegenüber dem Lagerflansch 7 fest angeordnet ist, dessen Abtriebswelle in Antriebsverbindung mit der Welle 10 steht. Dieser erste Drehantrieb 13 dient zur Generierung einer ersten Rotationsbewegung, nämlich der Drehung des Überschiebers 11 um die Achse der Welle 10 und damit relativ zu dem Drehteller 6.

Mit 14 ist eine an der Hohlwelle 5 befestigte Konsole bezeichnet, durch welche ein zweiter elektrischer Drehantrieb 15, z. B. ein Servomotor unterhalb des Drehtellers 6 getragen wird, dessen sich parallel zu der Achse 2 erstreckende Abtriebswelle über ein Zugmittelgetriebe, z. B. ein Riemengetriebe 16 mit der feststehenden Achse 2 in Wirkverbindung steht.

Das Riemengetriebe 16 besteht aus einer ersten mit der Abtriebswelle des zweiten Drehantriebs 15 drehschlüssig verbundenen ersten Riemenscheibe 17 und einer mit der Achse 2 fest verbundenen zweiten Riemenscheibe 18, so dass mittels des Drehantriebs 15 eine Drehung des Drehtellers 6 um die Achse 2 darstellbar ist.

Man erkennt, dass sich die Absolutbewegung des Überschiebers 11 und damit der Schubfinger 12 aus einer Überlagerung zweier Rotationsbewegungen, nämlich einer Drehung des Drehtellers 6 um die Achse 2 und einer Drehung des Überschiebers 11 um die Achse der Welle 10 ergibt.

Man erkennt ferner, dass bei dieser ersten Variante der erfindungsgemäßen Vorrichtung die Befestigungen beider Drehantriebe 13, 15 beweglich angeordnet sind, dass heißt der Drehbewegung des Drehtellers 6 unterliegen.

Mit 19 ist eine, die Achse 2 zentral durchziehende, an sich bekannte, zur Führung von Sperrluft bestimmte Bohrung bezeichnet.

Sämtliche Antriebskomponenten des Drehtellers 6 sowie des Überschiebers 11 befinden sich innerhalb eines zeichnerisch angedeuteten Gehäuses 20, aus dessen Oberseite das obere, den Überschieber 11 tragende Ende der Welle 10 herausragt.

Bei den in den, in den Zeichnungsfiguren 2 und 3 gezeigten Darstellungen sind Funktionselemente, die mit denjenigen der Fig. 1 übereinstimmen, entsprechend bezeichnet, so dass auf eine diesbezügliche wiederholte Beschreibung verzichtet werden kann..

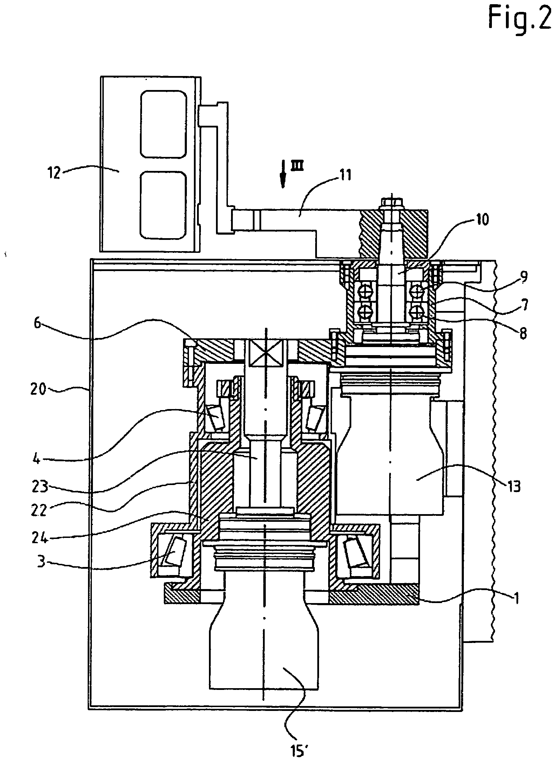

Bei der in Fig. 2 gezeigten zweiten Variante der erfindungsgemäßen Vorrichtung ist innerhalb eines Gehäuses 20 eine sich vertikal erstreckende, hohl ausgebildete Lagerglocke 24 auf der Konsole 1 fest angeordnet. Mit der Lagerglocke 24 und damit auch der Konsole 1 in fester Verbindung steht ein zweiter Drehantrieb 15', dessen Abtriebswelle mit einer, sich durch die Lagerglocke 24 hindurch erstreckenden Welle 23 in Antriebsverbindung steht.

Auf der Lagerglocke 24 mittels Wälzlagern 3, 4 gelagert ist eine Hohlwelle 22, deren oberseitiges Ende mit dem Drehteller 6 in fester Verbindung steht. In Abweichung von dem Ausführungsbeispiel gemäß Fig. 1 unterliegt somit nur der erste Drehantrieb 13 der Drehbewegung des Drehtellers 6, wohingegen der zweite Drehantrieb 15' ortsfest angeordnet ist.

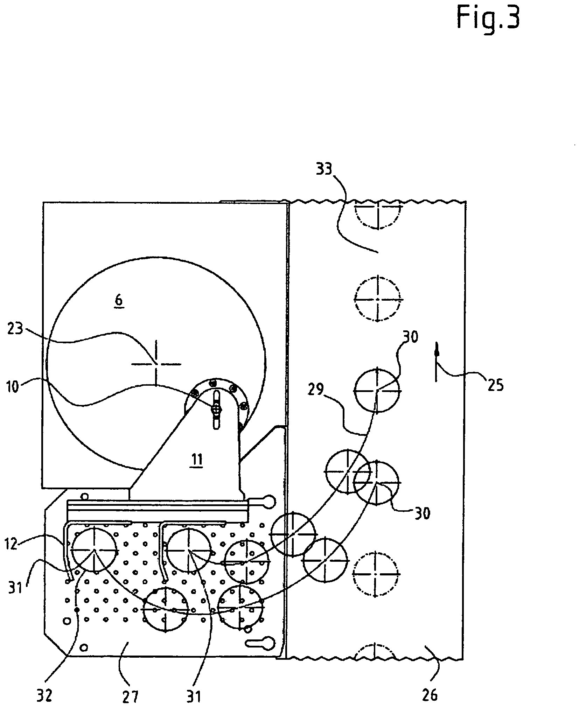

Fig. 3 zeigt in der Draufsicht ein sich in einer Richtung 25 mit gleichförmiger Geschwindigkeit bewegendes Transportband 26, welches unmittelbar an einer Absetzplatte 27 vorbeigeführt ist. Die höhengleich in einer gemeinsamen Ebene mit dem Transportband 26 angeordnete Absetzplatte 27 ist in an sich bekannter Weise mit einem zur Führung von Kühlluft bestimmten Bohrungsmuster 28 überzogen, so dass die auf dieser abgestellten Hohlglasartikel 32 eine Kühlwirkung erfahren.

Die Bewegung des Überschiebers 11 ist eine aus einer Drehung um die ortsfeste Achse der Welle 23 und einer Drehung um die Achse der sich mit dem Drehteller 6 bewegenden Welle 10 zusammengesetzte Bewegung, wobei durch Steuerung der beiden Drehantriebe 13, 15' die konkrete Gestalt einer Überführungskurve 29 sowie die Bewegung entlang dieser Kurve zwischen einem Aufnahmepunkt 31 auf der Absetzplatte 12 und einem Übergabepunkt 30 auf dem sich bewegenden Transportband 26 dahingehend eingerichtet ist, dass in dem Übergabepunkt 30 die Bewegung des Schubfingers 12 und damit des zu bewegenden Hohlglasartikels 32 zumindest angenähert tangential zu der Richtung 25 und geschwindigkeitsgleich mit dem Förderband 26 verläuft.

Auf diese Weise werden eine Beschädigung der Hohlglasartikel 32 während des Überschiebens gleichermaßen wie ein Umfallen vermieden und die Darstellung einer gleichförmigen Reihe 33 bestehend aus diesen Hohlglasartikeln auf dem Transportband 26 erreicht, und zwar unter Zugrundelegung eines raumsparenden und konstruktiv relativ einfachen Antriebssystems.

### Bezugszeichenliste:

| | | |
|---|---|---|
| 1 Konsole | 14 Konsole | 27 Absetzplatte |
| 2 Achse | 15 Drehantrieb | 28 Bohrungsmuster |
| 3 Wälzlager | 15' Drehantrieb | 29 Überführungskurve |
| 4 Wälzlager | 16 Riemengetriebe | 30 Übergabepunkt |
| 5 Hohlwelle | 17 Riemenscheibe | 31 Aufnahmepunkt |
| 6 Drehteller | 18 Riemenscheibe | 32 Hohlglasartikel |
| 7 Lagerflansch | 19 Bohrung | 33 Reihe |
| 8 Wälzlager | 20 Gehäuse | |
| 9 Wälzlager | 22 Hohlwelle | |
| 10 Welle | 23 Welle | |
| 11 Überschieber | 24 Lagerglocke | |
| 12 Schubfinger | 25 Richtung | |
| 13 Drehantrieb | 26 Transportband | |

## Patentansprüche

1. Vorrichtung zum horizontalen Schieben von Hohlglasartikeln (32) von einer ruhenden Absetzplatte (27) einer IS-Glasformmaschine auf ein sich in einer Richtung (25) gleichförmig geradlinig bewegendes Transportband (26), mit einem Überschieber (11), an dessen den Hohlglasartikeln (32) zugekehrtem einen Ende sich wenigstens ein, zur Anlage an den zu schiebenden Hohlglasartikeln (32) bestimmter Schubfinger (12) befindet, mit einem, mit dem anderen Ende des Überschiebers (11) in Wirkverbindung stehenden, einen ersten (13) und einen zweiten, unabhängig von dem ersten steuerbaren Drehantrieb (15, 15') umfassenden Antriebssystem, welches zur Darstellung einer, in einer Horizontalebene eingerichteten, aus einer Überlagerung von zwei durch die Drehantriebe (13, 15, 15') erzeugten Rotationsbewegungen gebildeten Überführungskurve (29) beginnend an einem Aufnahmepunkt (31) auf der Absatzplatte (27) und endend an einem Übergabepunkt (30) auf dem Transportband (26) eingerichtet ist, wobei das genannte eine Ende des Überschiebers (11) zur Darstellung der ersten, durch den ersten Drehantrieb (13) erzeugten Rotationsbewegung um die vertikale Achse einer Welle (10) drehbar angeordnet ist, wobei die Überführungskurve (29) im Übrigen durch die Überlagerung der ersten Rotationsbewegung mit lediglich der zweiten, durch den zweiten Drehantrieb (15, 15') erzeugten Rotationsbewegung um eine sich parallel mit Abstand zu der Welle (10) erstreckende ortsfeste Achse dargestellt ist, wobei der zweite Drehantrieb (15, 15') mit einem Drehteller (6) in Antriebsverbindung um die genannte ortsfeste Achse steht, und wobei die an ihrem oberen Ende den Überschieber (11) tragende Welle (10) in dem Drehteller (6) drehbar gelagert ist, **dadurch gekennzeichnet, dass** der erste Drehantrieb (13) mit dem Drehteller (6) in fester Verbindung steht, so dass die Überführungskurve (29) aus der Überlagerung der durch den zweiten Drehantrieb (15, 15') bewirkten Rotation des Drehtellers (6) um die ortsfeste Achse und der durch den ersten, sich zusammen mit der Welle (10) mit dem Drehteller (6) bewegenden Drehantrieb (13) bewirkten Rotation um die Achse der Welle (10) dargestellt ist.

2. Vorrichtung nach Anspruch 1, **dadurch gekennzeichnet, dass** sich der erste Drehantrieb (13) unterhalb des Drehtellers (6) befindet und an einem mit dem Drehteller (6) in fester Verbindung stehenden Lagerflansch (7) befestigt ist und dass in dem Lagerflansch (7) die Welle (10) gelagert ist.

3. Vorrichtung nach Anspruch 1 oder 2, **gekennzeichnet durch** eine diese tragende Konsole (1), die zur Befestigung an dem Maschinenrahmen einer IS-Glasformmaschine eingerichtet ist.

4. Vorrichtung nach einem der vorangegangenen Ansprüche 1 bis 3, **dadurch gekennzeichnet, dass** der Drehteller (6) mit einer sich vertikal erstreckenden Hohlwelle (5) in fester Verbindung steht und dass die Hohlwelle (5) um eine feststehende Achse (2) drehbar gelagert ist.

5. Vorrichtung nach Anspruch 4, **dadurch gekennzeichnet, dass** die Achse (2) auf der Konsole (1), die Vorrichtung tragend, abgestützt ist.

6. Vorrichtung nach einem der vorangegangenen Ansprüche 1 bis 3, **dadurch gekennzeichnet, dass** der Drehteller (6) mit einer sich vertikal erstreckenden Hohlwelle (22) in fester Verbindung steht, und dass die Hohlwelle (22) auf einer feststehenden Lagerglocke (24) gelagert ist.

7. Vorrichtung nach Anspruch 6, **dadurch gekennzeichnet, dass** der Drehteller (6) über eine, sich durch die Lagerglocke (24) hindurch erstreckende Welle (23) in Antriebsverbindung mit dem zweiten Drehantrieb (15') steht.

8. Vorrichtung nach Anspruch 7, **dadurch gekennzeichnet, dass** der zweite Drehantrieb (15') mit der Lagerglocke (24) in fester Verbindung steht.

9. Vorrichtung nach Anspruch 6 bis 8, **dadurch gekennzeichnet, dass** die Lagerglocke (24) auf der Konsole (1), die Vorrichtung tragend, abgestützt ist.

10. Vorrichtung nach Anspruch 4 oder 5, **dadurch gekennzeichnet, dass** der zweite Drehantrieb (15) mit der Hohlwelle (5) unterhalb des Drehtellers (6) in fester Verbindung steht.

11. Vorrichtung nach Anspruch 4, 5 oder 10, **dadurch gekennzeichnet, dass** der zweite Drehantrieb (15) mit der feststehenden Achse (2) in Antriebsverbindung steht.

12. Vorrichtung nach einem der vorangegangenen Ansprüche 1 bis 11, **gekennzeichnet durch** ein, alle Komponenten des Antriebssystems aufnehmendes Gehäuse (20).

13. Vorrichtung nach einem der vorangegangenen Ansprüche 1 bis 12, **dadurch gekennzeichnet, dass** die Überführungskurve (29) sowie die Bewegung entlang dieser Kurve durch Steuerung der beiden Drehantriebe (13, 15, 15') mit der Maßgabe angelegt ist, dass an dem Übergabepunkt (30) die Hohlglasartikel (32) zumindest angenähert tangential zu der Richtung (25) und geschwindigkeitsgleich mit dem Transportband (26) bewegt werden.

## Claims

1. Device for horizontally pushing hollow glass articles (32) from a resting dead plate (27) of an I.S. glassware forming machine onto a conveyor belt (26), which moves in a uniformly linear fashion in a direction (25), by means of a pusher (11), at one end of which facing the hollow glass articles (32) there is located at least one pushing finger (12) intended to come into contact with the hollow glass articles (32) to be pushed, having a drive system which is operatively connected to the other end of the pusher (11) and comprises a first rotary drive (13) and a second rotary drive (15, 15') which can be controlled independently of the first rotary drive, which drive system is arranged for producing a transfer curve (29), which is arranged in a horizontal plane and is formed from a superimposition of two rotational movements generated by the rotary drives (13, 15, 15'), beginning at a receiving point (31) on the dead plate (27) and ending at a transfer point (30) on the conveyor belt (26), wherein the said one end of the pusher (11) for producing the first rotational movement, which is generated by the first rotary drive (13), is disposed so as to be able to rotate about the vertical axis of a shaft (10), wherein the transfer curve (29) is otherwise produced by the superimposition of the first rotational movement with only the second rotational movement, which is generated by the second rotary drive (15, 15'), about a fixedly disposed axis which extends in parallel at a spaced interval with respect to the shaft (10), wherein the second rotary drive (15, 15') is in driving engagement with a rotary plate (6) about the said fixedly disposed axis, and wherein the shaft (10) which at its upper end carries the pusher (11) is rotatably mounted in the rotary plate (6), **characterised in that** the first rotary drive (13) is fixedly connected to the rotary plate (6) so that the transfer curve (29) is produced from the superimposition of the rotation of the rotary plate (6) as effected by the second rotary drive (15, 15'), about the fixedly disposed axis, and from the rotation about the axis of the shaft (10) as effected by the first rotary drive (13) which together with the shaft (10) moves with the rotary plate (6).

2. Device as claimed in claim 1, **characterised in that** the first rotary drive (13) is located underneath the rotary plate (6) and is attached to a bearing flange (7), which is fixedly connected to the rotary plate (6), and that the shaft (10) is mounted in the bearing flange (7).

3. Device as claimed in claim 1 or 2, **characterised by** a console (1) which carries the device and which is arranged for attachment to the machine frame of an I.S. glassware forming machine.

4. Device as claimed in any one of the preceding claims 1 to 3, **characterised in that** the rotary plate (6) is fixedly connected to a vertically extending hollow shaft (5), and that the hollow shaft (5) is rotatably mounted about a stationary axle (2).

5. Device as claimed in claim 4, **characterised in that** the axle (2) is supported on the console (1), carrying the device.

6. Device as claimed in any one of the preceding claims 1 to 3, **characterised in that** the rotary plate (6) is fixedly connected to a vertically extending hollow shaft (22), and that the hollow shaft (22) is mounted on a stationary bell-shaped bearing (24).

7. Device as claimed in claim 6, **characterised in that** the rotary plate (6) is in driving engagement with the second rotary drive (15') by means of a shaft (23) which extends through the bell-shaped bearing (24).

8. Device as claimed in claim 7, **characterised in that** the second rotary drive (15') is fixedly connected to the bell-shaped bearing (24).

9. Device as claimed in claim 6 to 8, **characterised in that** the bell-shaped bearing (24) is supported on the console (1), carrying the device.

10. Device as claimed in claim 4 or 5, **characterised in that** the second rotary drive (15) is fixedly connected to the hollow shaft (5) underneath the rotary plate (6).

11. Device as claimed in claim 4, 5 or 10, **characterised in that** the second rotary drive (15) is in driving engagement with the stationary axle (2).

12. Device as claimed in any one of the preceding claims 1 to 11, **characterised by** a housing (20) which accommodates all of the components of the drive system.

13. Device as claimed in any one of the preceding claims 1 to 12, **characterised in that** the transfer curve (29) and the movement along this curve are applied by control of the two rotary drives (13, 15, 15') with the proviso that at the transfer point (30) the hollow glass articles (32) are moved at least approximately tangentially with respect to the direction (25) and at the same speed as the conveyor belt (26).

## Revendications

1. Dispositif pour le déplacement horizontal d'articles creux en verre (32) d'une plaque de dépose (27) au repos d'une machine de façonnage du verre à section individuelle vers une bande transporteuse (26) se déplaçant en ligne droite à vitesse constante dans une direction (25), avec un élément de glissement (11), dont une première extrémité dirigée vers les articles creux (32) présente au moins un doigt pousseur (12) destiné à être appliqué contre l'article creux (32) à déplacer, avec un système d'entraînement en liaison active avec l'autre extrémité de l'élément de glissement (11), comportant un premier entraînement rotatif (13) et un deuxième entraînement rotatif (15, 15') pouvant être commandé indépendamment du premier, ledit système d'entraînement étant prévu pour la réalisation d'une courbe de transfert (29) située sur un plan horizontal et formée par une superposition de deux mouvements de rotation générés par les entraînements rotatifs (13, 15, 15'), ladite courbe de transfert commençant à un point de réception (31) sur la plaque de dépose (27) et se terminant à un point de transfert (30) sur la bande transporteuse (26), ladite première extrémité de l'élément de glissement (11) étant disposée de manière rotative pour la réalisation du premier mouvement de rotation généré par le premier entraînement rotatif (13) autour de l'axe vertical d'un arbre (10), la courbe de transfert (29) étant au demeurant réalisée par la superposition du premier mouvement de rotation avec exclusivement le deuxième mouvement de rotation généré par le deuxième entraînement rotatif (15, 15') autour d'un axe fixe s'étendant avec un espacement parallèlement à l'arbre (10), le deuxième entraînement rotatif (15, 15') étant en liaison d'entraînement avec un plateau tournant (6) autour dudit axe fixe, et l'arbre (10) supportant l'élément de glissement (11) à son extrémité supérieure étant monté de manière rotative dans le plateau tournant (6), **caractérisé en ce que** le premier entraînement rotatif (13) est en liaison fixe avec le plateau tournant (6), de telle manière que la courbe de transfert (29) est réalisée par la superposition de la rotation du plateau tournant (6) autour de l'axe fixe, entraînée par le deuxième entraînement rotatif (15, 15'), et de la rotation du plateau tournant (6) autour de l'axe de l'arbre (10), entraînée par le premier entraînement rotatif (13) se déplaçant avec l'arbre (10) avec le plateau tournant (6).

2. Dispositif selon la revendication 1, **caractérisé en ce que** le premier entraînement rotatif (13) se trouve en dessous du plateau tournant (6) et est fixé à une bride de palier (7) en liaison fixe avec le plateau tournant (6), et **en ce que** l'arbre (10) est monté dans la bride de palier (7).

3. Dispositif selon la revendication 1 ou la revendication 2, **caractérisé par** une console (1) supportant ledit dispositif, laquelle est prévue pour la fixation au bâti d'une machine de façonnage du verre à section individuelle.

4. Dispositif selon l'une des revendications 1 à 3, **caractérisé en ce que** le plateau tournant (6) est en liaison fixe avec un arbre creux (5) à extension verticale, et **en ce que** l'arbre creux (5) est monté de manière rotative autour d'un axe fixe (2).

5. Dispositif selon la revendication 4, **caractérisé en ce que** l'axe (2) s'appuie sur la console (1) qui supporte le dispositif.

6. Dispositif selon l'une des revendications 1 à 3, **caractérisé en ce que** le plateau tournant (6) est en liaison fixe avec un arbre creux (22) à extension verticale, et **en ce que** l'arbre creux (22) est monté sur un carter de palier fixe (24).

7. Dispositif selon la revendication 6, **caractérisé en ce que** le plateau tournant (6) est en liaison d'entraînement avec le deuxième entraînement rotatif (15') par l'intermédiaire d'un arbre (23) s'étendant au travers du carter de palier (24).

8. Dispositif selon la revendication 7, **caractérisé en ce que** le deuxième entraînement rotatif (15') est en liaison fixe avec le carter de palier (24).

9. Dispositif selon les revendications 6 à 8, **caractérisé en ce que** le carter de palier (24) s'appuie sur la console (1) qui supporte le dispositif.

10. Dispositif selon la revendication 4 ou la revendication 5, **caractérisé en ce que** le deuxième entraînement rotatif (15) est en liaison fixe avec l'arbre creux (5) en dessous du plateau tournant (6).

11. Dispositif selon la revendication 4, 5 ou 10, **caractérisé en ce que** le deuxième entraînement rotatif (15) est en liaison d'entraînement avec l'axe fixe (2).

12. Dispositif selon l'une des revendications 1 à 11, **caractérisé par** un carter (20) où sont logés tous les composants du système d'entraînement.

13. Dispositif selon l'une des revendications 1 à 12, **caractérisé en ce que** la courbe de transfert (29) ainsi que le déplacement sur ladite courbe par commande des deux entraînements rotatifs (13, 15, 15') sont réalisés à la condition qu'au point de transfert (30), les articles creux (32) soient déplacés au moins sensiblement tangentiellement à la direction (25), et à la même vitesse que la bande transporteuse (26).
